# EUROPEAN PATENT APPLICATION

(11) **EP 4 559 718 A1**
(43) Date of publication of application: **28.05.2025**
(21) Application number: 23212038.6
(22) Date of filing: 24.11.2023
(51) Int. Cl.: B60L 3/00, B60L 58/10

(54) **METHOD FOR DETECTING AND EVALUATING A MECHANICAL IMPACT ON A BATTERY PACK IN AN AT LEAST PARTIALLY ELECTRIC VEHICLE**

(71) Applicant: Samsung SDI Co., Ltd., Yongin-si, Gyeonggi-do 17084 (KR)
(72) Inventor: Erhart, Michael, 8054 Seiersberg-Pirka (AT)
(74) Representative: Gulde & Partner

(57) **Abstract**

The present disclosure refers to a method for detecting and evaluating a mechanical impact on a battery pack (210) in an at least partially electric vehicle (100), wherein the battery pack (210) is disposed on an underbody (110) of the vehicle (100). The method includes a step of detecting first condition data determining an underbody impact using a first sensor (230). Further, the underbody impact is determined based on the detected first condition data. Afterwards, a degree of severity, comprising a plurality of levels, of the underbody impact is determined based on second condition data characterizing a severity of the underbody impact detected using a second sensor (240, 241). Furthermore, an output is determined based on the determined degree of severity. The invention further relates to a battery system (200) including a battery pack (210), wherein the battery pack (210) is disposable on an underbody (110) of an at least partially electric vehicle (100), comprising at least one battery cell, a first sensor (230) and a second sensor (240, 241) and/or a communication interface for detecting and/or obtaining first and second condition data, and a control unit (220) being configured for performing the disclosed method, and to an electric vehicle (100) comprising the battery system (200) according to the invention.

## Description

### Field of the Disclosure

The present disclosure relates to a method for detecting and evaluating a mechanical impact on a battery pack in an at least partially electric vehicle. The present disclosure also relates to a battery system with a control unit, the control unit being configured for performing the disclosed method, and an electric vehicle including the battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to give power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected in series or in parallel. That is, the battery module is formed by interconnecting the electrode terminals of the plurality of battery cells depending on a required amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected in series for providing a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

A battery system may also include a battery management system (BMS), which is any suitable electronic system that is configured to manage the rechargeable battery cell, battery module, and battery pack, such as by protecting the batteries from operating outside their safe operating area, monitoring their states, calculating secondary data, reporting that data, controlling its environment, authenticating it and/or balancing it. For example, the BMS may monitor the state of the battery cell as represented by voltage (e.g., a total voltage of the battery pack or battery modules, and/or voltages of individual battery cells), temperature (e.g., an average temperature of the battery pack or battery modules, coolant intake temperature, coolant output temperature, or temperatures of individual battery cells), coolant flow (e.g., flow rate and/or cooling liquid pressure), and current. Additionally, the BMS may calculate values based on the above parameters, such as minimum and maximum cell voltage, state of charge (SOC) or depth of discharge (DOD) to indicate the charge level of the battery cell, state of health (SOH; a variously-defined measurement of the remaining capacity of the battery cell as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. In other examples, the BMS may be also distributed, with a BMS board is installed at each cell, with just a single communication cable between the battery cell and a controller. In yet other examples, the BMS may have a modular construction including a few controllers, each handling a certain number of cells, while communicating between the controllers. Centralized BMSs are most economical, but are least expandable, and are plagued by a multitude of wires. Distributed BMSs are the most expensive, but are simplest to install, and offer the cleanest assembly. Modular BMSs provide a compromise of the features and problems of the other two topologies.

The BMS may protect the battery pack from operating outside its safe operating area. Operation outside the safe operating area may be indicated by over-current, over-voltage (during charging), over-temperature, under-temperature, over-pressure, and ground fault or leakage current detection. The BMS may prevent the battery from operating outside its safe operating parameter by including an internal switch (e.g., a relay or solid-state device) that opens if the battery is operated outside its safe operating parameters, requesting the devices to which the battery is connected to reduce or even terminate using the battery, and actively controlling the environment, such as through heaters, fans, air conditioning or liquid cooling.

The mechanical integration of a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually include a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge, SoC, potential electrical performance, charging ability and internal resistance as well as actual or predicted power demands or surpluses of the consumers. Therefore, battery systems usually include a battery management system, BMS, for obtaining and processing such information on system level and further a plurality of battery module managers, BMMs, which are part of the system's battery modules and obtain and process relevant information on module level. Particularly, the BMS usually measures the system voltage, the system current, the local temperature at different places inside the system housing, and the insulation resistance between live components and the system housing. Additionally, the BMMs usually measure the individual cell voltages and temperatures of the battery cells in a battery module.

Thus, the BMS is provided for managing the battery pack, such as by protecting the battery from operating outside its safe operating area, monitoring its state, calculating secondary data, reporting that data, controlling its environment, authenticating it and/or balancing it.

In case of an abnormal operation state, a battery pack shall usually be disconnected from a load connected to a terminal of the battery pack. Therefore, battery systems further include a battery disconnect unit, BDU, that is electrically connected between the battery module and battery system terminals. Thus, the BDU is the primary interface between the battery pack and the electrical system of the vehicle. The BDU includes electromechanical switches that open or close high current paths between the battery pack and the electrical system. The BDU provides feedback to the battery control unit, BCU, accompanied to the battery modules such as voltage and current measurements. The BCU controls the switches in the BDU using low current paths based on the feedback received from the BDU. The main functions of the BDU may thus include controlling current flow between the battery pack and the electrical system and current sensing. The BDU may further manage additional functions like external charging and pre-charging.

EP 4047715 A2 discloses a traction battery motor vehicle system for a motor vehicle for detecting of an impact on a traction battery. The system includes a traction battery and an underbody element arranged on a lower side of the traction battery. The underbody element includes an air-filled chamber between the underbody element and the lower side of the traction battery. An evaluation unit is adapted to detect an impact on the traction battery depending on a pressure signal of an air pressure in the chamber. The evaluation unit is adapted to receive vehicle sensor data and to verify the pressure signal on the basis of the vehicle sensor data and/or to adjust a sensitivity for detecting an impact.

US 20200161717 A1 discloses a battery for a vehicle with a battery management system (BMS). The battery includes an acceleration sensor and an evaluation apparatus. If a bollard bears against a base part, but deformation has not yet taken place, a first state Z1 is present. After a more extensive intrusion by the bollard, the base has intruded into the battery module, and leads to an acceleration of the battery module that can be detected by the acceleration sensor, and this detection can be taken as a basis for inferring the second state Z2. The document further discloses, that the battery is deactivated on detection of the second state Z2.

DE 102021117216 A1 discloses a vehicle, including a battery system and a protective plate arranged below the battery system. The protective plate has a flat pressure measuring device, and is arranged at a distance from the battery system. Measurement information is determined using the pressure measurement device, wherein the measurement information relates to a pressure generated by a load acting on the protective plate from below. With the help of a warning and/or damage signal, a distinction can be made between different damage levels.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a method for detecting and evaluating a mechanical impact on a battery pack in an at least partially electric vehicle, wherein the battery pack is disposed on an underbody of the vehicle, is provided including the steps of a) detecting first condition data determining an underbody impact using a first sensor; b) determining the underbody impact based on the detected first condition data; c) determining a degree of severity, including a plurality of levels, of the underbody impact based on second condition data characterizing a severity of the underbody impact detected using a second sensor; and d) determining an output based on the determined degree of severity.

According to another aspect of the present disclosure, a battery system is provided, including a battery pack, wherein the battery pack is disposable on an underbody of an at least partially electric vehicle, including at least one battery cell; a first sensor and a second sensor or a communication interface for detecting and/or obtaining first and second condition data; and a control unit; wherein the control unit is configured for performing the following steps of a) detecting first condition data determining an underbody impact using a first sensor; b) determining the underbody impact based on the detected first condition data; c) determining a degree of severity, including a plurality of levels, of the underbody impact based on second condition data characterizing a severity of the underbody impact detected using a second sensor; and d) determining an output based on the determined degree of severity.

Yet another aspect of the present disclosure refers to an electric vehicle including the battery system according to the invention.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic bottom view of an electric vehicle including a battery system according to according to an embodiment.
- Fig. 2: illustrates a method for detecting and evaluating a mechanical impact on a battery pack in an at least partially electric vehicle according to an embodiment of the invention.
- Fig. 3: illustrates a method for detecting and evaluating a mechanical impact on a battery pack in an at least partially electric vehicle according to another embodiment of the invention.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may include metallization, e.g. surface metallizations and/or pins, and/or may include conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a method for detecting and evaluating a mechanical impact on a battery pack in an at least partially electric vehicle, wherein the battery pack is disposed on an underbody of the vehicle, is provided. The method includes a step of detecting first condition data determining an underbody impact using a first sensor. Further, the underbody impact is determined based on the detected first condition data. Afterwards, a degree of severity, including a plurality of levels, of the underbody impact is determined based on second condition data characterizing a severity of the underbody impact detected using a second sensor. Furthermore, an output is determined based on the determined degree of severity.

In other words, the method for determining a severity of the impact of the at least partially electric driven vehicle including the battery pack, arranged at the underbody of the vehicle, the first sensor, for example an underbody impact sensor, adapted to detect an underbody impact and the second sensor adapted to measure the severity, is provided. Consequently, in the context of the present invention, first condition data, for example an impact sensor signal, of the first sensor is evaluated and, if the evaluation indicates that the first sensor signals that an underbody impact has occurred, multiple degrees of damage are quantified by evaluating the second condition data of the second sensor.

Battery systems are usually located in the underbody of the vehicle. Various misuse events such as driving over bollards, curbs or the like can lead to massive mechanical load events, which are referred to as underbody events. On the one hand, an appropriate mechanical structure is required. In addition, there are various concepts for electrical detection.

To minimize the cost of underbody event detection concepts, simple designs are usually used (e.g.: mechanical interruption of electrical line wiring or simple switches). However, these sensors, which according to one embodiment are used as the first sensor, do not provide information about the severity of the event. The invention generates additional information about the underbody event to measure the severity of the event. In addition to the first sensor, the second sensor is used according to the invention to measure the severity of the event based on the second condition data. In the case of an event signal from the underbody detection, the corresponding signals from the second sensor are determined, for example by the BMS. This can be used to classify the severity of the event. Depending on the severity, different derivations can be determined. In other words, the plurality of levels of the degree of severity describes the severity of the mechanical stress and thus the potential consequences for the battery pack. By using a plurality of levels, it is possible to distinguish between different events and their consequences and to gain knowledge in order to take adequate measures.

Furthermore, the combination of the first sensor and the second sensor makes it possible to determine the underbody impact on the one hand and its severity on the other. It is usually not possible to determine the impact using only the second sensor. This would sometimes not be able to distinguish whether, for example, a curb with a small area has been driven over, which is a more critical case and which can lead to damage, or whether a more extensive impact occurs in an area of terrain. The second sensor, such as an accelerometer introduced later, could show similar values in such cases, where the point load could be higher in one case than in the other. In contrast, the first sensor only indicates this punctual load, but does not allow classification. This advantage is achieved by combining both sensors.

According to one embodiment the plurality of levels of the degree of severity includes at least three different levels.

According to an embodiment, the battery pack is part of a traction battery.

According to one embodiment, the degree of severity is determined using second condition data correlating in time to the first condition data. This makes it possible to determine, based on the temporal course of the first condition data, whether an underbody impact has occurred and then to evaluate the corresponding time by temporal assignment using the second condition data. Thus, first it is indicated whether an event is present, and afterwards it is checked at the time of this event, how large the severity of this event was.

According to a further embodiment, the second condition data includes an acceleration of the vehicle, for example of the underbody. An acceleration signal is particularly suitable for quantifying the severity of the underbody impact and assigning it to a level. Accordingly, it is possible to concretely differentiate between a plurality of levels, each of which also entails different potential consequences and damage or signifies a probability of these. This can be done, for example, on the basis of the amplitude and/or number of the acceleration signal, since typical characteristics of this signal correlate with the severity of the underbody impact. If the second condition data includes an acceleration signal of the underbody of the vehicle on which the battery pack is arranged, a particular local correlation is present and, in particular, vibrations and deflections leading to the acceleration signal are detected, which have a particular effect on the battery pack, since a damping mass between the battery pack and the location of the measurement is reduced.

According to another embodiment, the second sensor includes on-vehicle sensors, according to one embodiment AIRBAG and/or ESP sensors. According to this embodiment, already existing sensors of the vehicle are used. Accordingly, this includes a particularly cost-effective variant, since existing sensor technology is already available for the application of the method according to the invention and is used for this purpose. Thus, additional sensors do not necessarily have to be provided. In other words, the second sensor is a sensor of the vehicle which is also used for safety systems (e.g. an airbag or an electronic stability program) or for a driver assistance system.

In another embodiment of the present disclosure, the second sensor includes an acceleration sensor. An acceleration sensor is a sensor that measures its acceleration. These sensors can thus also detect impact severity. For example, acceleration sensors respond to an abrupt event of the vehicle, and the signal triggering typically occurs at acceleration values of 3 to 5 g. Due to the aforementioned sensors, collision, collision direction and/or collision intensity can be detected immediately and precisely, which in turn translates into increased accuracy of a determined severity.

According to a further embodiment, in addition to determining the degree of severity of the underbody impact based on the second condition data using the second sensor, a determination of the degree of severity of the underbody impact based on third condition data using a third sensor is performed, wherein the third sensor is a sensor designed for insulation measurement of the battery pack. This is done, for example, by measuring the insulation resistance between live components and the system housing. If such an insulation measurement indicates a fault after an underbody impact, this indicates a massive event, so this serves to support the determination of the severity.

In a further embodiment, the second condition data is assigned to an area of the battery pack. The area of the battery pack is in this case an area of the vehicle or of the underbody of the vehicle on which the battery pack is arranged. In one embodiment, this is the entire underbody. In another embodiment, this area is a footprint of the battery pack. The footprint is a surface of the vehicle or the underbody of the vehicle on which the battery pack is arranged. Through this, there is a close connection between captured second condition data and the battery pack. For example, it is possible to exclude falsifications as far as possible. Thus, it can be assumed that the corresponding second condition data in an area of the battery pack show essentially no deviation. Thus, a local identity can be assumed.

According to another embodiment, the second sensor is disposed in a lower half of the battery pack. Accordingly, the relevant area of the battery pack may be monitored using the second condition data. In the event of an underbody impact, the effects naturally occur in the area of the underbody and therefore in a lower area of the battery pack. Accordingly, this is also where the main potential damage and mechanical stresses occur, which can be advantageously detected on the basis of this design.

According to one embodiment, the second sensor is directly connected to the battery pack, according to one embodiment to a structure-forming component of the battery pack. Due to the direct connection, there are no interfering components between the battery pack and the second sensor that influence the signal. Accordingly, the second condition data provided by the second sensor can be used to determine the mechanical load acting on the battery pack. Structure-forming components include components that are not mainly essential for the basic function of a battery, but for its mechanical stability, arrangement, connection with other components, for example of the vehicle, or protection. Accordingly, it is advantageous to gain knowledge of a mechanical load acting on these structure-forming components. According to one embodiment the second sensor is fixed to a frame of the battery pack.

According to a further embodiment, the second sensor is disposed on a slave board or Cell Supervision Circuit, CSC, of the BMS. This eliminates the need for a separate sensor and additional cabling, resulting in cost benefits. In addition, CSCs are usually positioned close to the cells or cells combined into modules, so that the sensor is also located close to the components to be monitored.

According to another embodiment, the second state data is detected using a plurality of second sensors. In other words, a plurality of second sensors is evaluated in order to improve a determination accuracy.

In a further embodiment, the plurality of second sensors are disposed on slave boards, Cell Supervision Circuit, CSC, of a distributed BMS. According to one embodiment, a distributed BMS, or BMS board, is installed at each cell, with just a single communication cable between the battery and a controller.

In another embodiment of the present disclosure, the method further includes a step of determining and storing a fault report, wherein the fault report is output at a next regular service if the determined degree of severity indicates a first level of the plurality of levels. In other words, the determined degree of severity is used to determine a further action or measure. The first level is an underbody event that does not yet indicate an instantaneous function-impairing effect. For example, the various levels, in this case the first level, are determined by comparing the second condition data with a reference signal and then comparing, for example, a magnitude and/or frequency of deflections of the second condition data with the reference signal. Here, for example, percentage threshold values are determined and as soon as these are reached, the corresponding level of the degree of severity is determined. The first level therefore includes values at which operation is still possible. However, a closer examination of the battery pack should be carried out in the foreseeable future. Consequently, a diagnostic error code is stored, which is output during the next regular maintenance.

According to a further embodiment, the method further includes a step of determining and outputting a warning if the determined degree of severity indicates a second level of the plurality of levels. The second level is an underbody event that suggests potential momentary function-impairing impact. For example, the different levels, presently the second level, are determined by comparing the second condition data to a reference signal and then comparing, for example, a magnitude and/or frequency of deflections of the second condition data to the reference signal. Here, for example, percentage threshold values are determined and as soon as these are reached, the corresponding level of the degree of severity is determined. The second level thus includes values that exceed the first level and at which operation is then only possible to a limited extent. A closer examination of the battery pack should be carried out immediately.

In a further embodiment, the method further includes a step of limiting or stopping an operation of the battery pack if the determined degree of severity indicates a third level of the plurality of levels. The third level is an underbody event that assumes a momentary function-impairing effect. For example, the different levels, presently the third level, are determined by comparing the second condition data with a reference signal and then, for example, comparing a magnitude and/or frequency of deflections of the second condition data with the reference signal. Here, for example, percentage threshold values are determined and as soon as these are reached, the corresponding level of the degree of severity is determined. The third level thus includes values that exceed the second level and at which operation is then stopped.

According to another aspect of the present disclosure, a battery system is provided, including a battery pack, wherein the battery pack is disposable on an underbody of an at least partially electric vehicle, including at least one battery cell, a first sensor and a second sensor or a communication interface for detecting and/or obtaining first and second condition data and a control unit. The control unit is configured for performing the following steps of a) detecting first condition data determining an underbody impact using a first sensor, b) determining the underbody impact based on the detected first condition data, c) determining a degree of severity, including a plurality of levels, of the underbody impact based on second condition data characterizing a severity of the underbody impact detected using a second sensor and d) determining an output based on the determined degree of severity.

According to another aspect of the present disclosure, an electric vehicle including the battery system according the invention is provided.

### Specific Embodiments

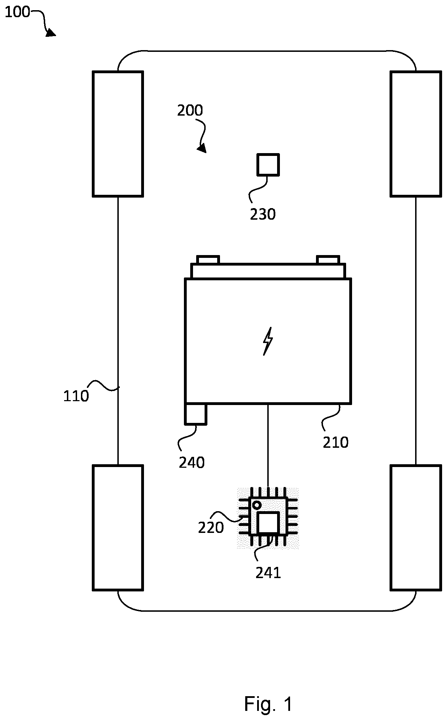

Fig. 1 is a bottom view illustrating an underbody of an electric vehicle 100 including a battery system 200 according to an embodiment. This is only a schematic representation. The vehicle 100 includes an underbody 110 which is transparent for illustrative purposes, thus allowing a view of the likewise schematic arrangement of a battery pack 210 of the battery system 200. The battery pack 210 is arranged on and connected to the underbody 110 in a known manner. The battery system 200 further includes a control unit 220, which in the present case is the BMS 220 of the battery system 200. Furthermore, the battery system 200 includes a first sensor 230, which is designed to detect an underbody impact. In addition, the battery system 200 comprises one second sensor 240 and another second sensor 241, which are one acceleration sensor 240 and another acceleration sensor 241. The one second sensor 240 of the two second sensors 240, 241 is directly connected to and arranged on the battery pack 210. The other second sensor 241 of the two second sensors 240, 241 is arranged directly on the BMS 220. It should be noted here that according to other embodiments of the inventions, a distributed BMS 220 may be used instead of a central BMS 220, in which case a plurality of further other second sensors 241 are then arranged on the plurality of BMS 220. The schematic diagram of Figure 1 also does not define a forced separate arrangement of the BMS 220 from the battery pack 210. The BMS 220 is arranged with the other second sensor 241 on the battery pack 210 in a different embodiment, as is the one sensor 240.

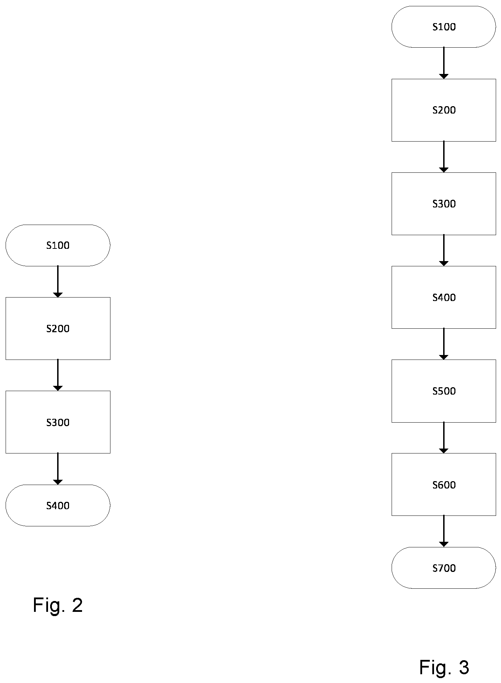

Fig. 2 illustrates a method for detecting and evaluating a mechanical impact on the battery pack 210 in the at least partially electric vehicle 100 according to an embodiment of the invention. In a first step S100, first condition data is detected determining an underbody impact using the first sensor 230. The first sensor 230 is, among other things, a sensor that detects an interruption of an electrical signal or a deformation.

Subsequently, in step S200, the underbody impact is determined based on the detected first condition data.

If an underbody impact has been detected, this is followed in step S300 by determining a degree of severity, including a plurality of levels, of the underbody impact based on second condition data characterizing a severity of the underbody impact detected using the one second sensor 240 and the other second sensor 241. Consequently, a severity of the underbody impact is determined and classified here based on a second condition data corresponding in time to the first condition data detected by the two second sensors 240, 241.

Based on this classification and the level of the degree of severity based thereon, an output is then determined in step S400.

Fig. 3 illustrates method for detecting and evaluating a mechanical impact on the battery pack 210 in an the least partially electric vehicle 100 according to another embodiment of the invention. Steps S100 to S400 do not differ from those of the method in Fig. 2, so that the preceding explanations also apply to the embodiment in Fig. 3.

After the output has been determined in step S400, a determination is made as to which level of the degree of severity has been determined. In the following, the corresponding necessary measures are taken depending on the level.

Accordingly, in step S500, it is determined that a first level is present. In this case, a fault report is determined and stored, wherein the fault report is output at a next regular service.

Furthermore, a second level is determined and therefore determining and outputting a warning is performed in step S600.

In addition, a third level is detected and limiting or stopping an operation of the battery pack 210 is performed in step S700.

### Reference signs

- 100: vehicle
- 110: underbody
- 200: battery system
- 210: battery pack
- 220: control unit/BMS
- 230: first sensor
- 240: second sensor/acceleration sensor
- S100: Detecting first condition data
- S200: Determining the underbody impact
- S300: Determining a degree of severity
- S400: Determining an output
- S500: Determining and storing a fault report
- S600: Determining and outputting a warning
- S700: Limiting or stopping an operation of the battery pack

## Claims

1. A method for detecting and evaluating a mechanical impact on a battery pack (210) in an at least partially electric vehicle (100), wherein the battery pack (210) is disposed on an underbody (110) of the vehicle (100), comprising the steps of:
a) Detecting (S100) first condition data determining an underbody impact using a first sensor (230);
b) Determining (S200) the underbody impact based on the detected first condition data;
c) Determining (S300) a degree of severity, comprising a plurality of levels, of the underbody impact based on second condition data characterizing a severity of the underbody impact detected using a second sensor (240, 241); and
d) Determining (S400) an output based on the determined degree of severity.

2. Method according to claim 1, wherein the degree of severity is determined using second condition data correlating in time to the first condition data.

3. Method according to claim 1 or 2, wherein the second condition data comprises an acceleration of the vehicle (100).

4. Method according to any one of the preceding claims, wherein the second sensor (240, 241) comprises on-vehicle sensors.

5. Method according to any one of the preceding claims, wherein the second sensor (240, 241) comprises an acceleration sensor.

6. Method according to any one of the preceding claims, wherein the second condition data is assigned to an area of the battery pack (210).

7. Method according to any one of the preceding claims, wherein the second sensor (240, 241) is disposed in a lower half of the battery pack (210).

8. Method according to any one of the preceding claims, wherein the second sensor (240, 241) is directly connected to the battery pack (210).

9. Method according to any one of the preceding claims, wherein the second state data is detected using a plurality of second sensors (240, 241).

10. Method according to claim 9, wherein the plurality of second sensors (240, 241) are disposed on slave boards of a distributed battery management system, BMS, (220).

11. Method according to any one of the preceding claims, the method further comprising:
Determining and storing a fault report, wherein the fault report is output at a next regular service if the determined degree of severity indicates a first level of the plurality of levels.

12. Method according to any one of the preceding claims, wherein the method further comprises:
Determining and outputting a warning if the determined degree of severity indicates a second level of the plurality of levels.

13. Method according to any one of the preceding claims, wherein the method further comprises:
Limiting or stopping an operation of the battery pack (210) if the determined degree of severity indicates a third level of the plurality of levels.

14. A battery system (200), comprising:
a battery pack (210), wherein the battery pack (210) is disposable on an underbody (110) of an at least partially electric vehicle (100), comprising at least one battery cell;
a first sensor (230) and a second sensor (240, 241) and/or a communication interface for detecting and/or obtaining first and second condition data; and
a control unit (220);
wherein the control unit (220) is configured for performing the following steps of:
a) Detecting first condition data determining an underbody (110) impact using the first sensor (230) and/or the communication interface;
b) Determining the underbody impact based on the detected first condition data;
c) Determining a degree of severity, comprising a plurality of levels, of the underbody impact based on second condition data characterizing a severity of the underbody impact detected using the second sensor (240, 241) and/or the communication interface; and
d) Determining an output based on the determined degree of severity.

15. An electric vehicle (100) comprising the battery system (200) according to claim 14.

## Amended claims

### Amended claims in accordance with Rule 137(2) EPC.

1. A method for detecting and evaluating a mechanical impact on a battery pack (210) in an at least partially electric vehicle (100), wherein the battery pack (210) is disposed on an underbody (110) of the vehicle (100), comprising the steps of:
a) Detecting (S100) first condition data determining an underbody impact using a first sensor (230);
b) Determining (S200) the underbody impact based on the detected first condition data;
c) Determining (S300) a degree of severity, comprising a plurality of levels, of the underbody impact based on second condition data about a severity of the underbody impact detected using a second sensor (240, 241); and
d) Determining (S400) an output based on the determined degree of severity.

2. Method according to claim 1, wherein the degree of severity is determined using second condition data correlating in time to the first condition data.

3. Method according to claim 1 or 2, wherein the second condition data comprises an acceleration of the vehicle (100).

4. Method according to any one of the preceding claims, wherein the second sensor (240, 241) comprises on-vehicle sensors.

5. Method according to any one of the preceding claims, wherein the second sensor (240, 241) comprises an acceleration sensor.

6. Method according to any one of the preceding claims, wherein the second condition data is assigned to an area of the battery pack (210).

7. Method according to any one of the preceding claims, wherein the second sensor (240, 241) is disposed in a lower half of the battery pack (210).

8. Method according to any one of the preceding claims, wherein the second sensor (240, 241) is directly connected to the battery pack (210).

9. Method according to any one of the preceding claims, wherein the second state data is detected using a plurality of second sensors (240, 241).

10. Method according to claim 9, wherein the plurality of second sensors (240, 241) are disposed on slave boards of a distributed battery management system, BMS, (220).

11. Method according to any one of the preceding claims, the method further comprising:
Determining and storing a fault report, wherein the fault report is output at a next regular service if the determined degree of severity indicates a first level of the plurality of levels.

12. Method according to any one of the preceding claims, wherein the method further comprises:
Determining and outputting a warning if the determined degree of severity indicates a second level of the plurality of levels.

13. Method according to any one of the preceding claims, wherein the method further comprises:
Limiting or stopping an operation of the battery pack (210) if the determined degree of severity indicates a third level of the plurality of levels.

14. A battery system (200), comprising:
a battery pack (210), wherein the battery pack (210) is disposable on an underbody (110) of an at least partially electric vehicle (100), comprising at least one battery cell;
a first sensor (230) and a second sensor (240, 241) and/or a communication interface for detecting and/or obtaining first and second condition data; and
a control unit (220);
wherein the control unit (220) is configured for performing the following steps of:
a) Detecting first condition data determining an underbody (110) impact using the first sensor (230) and/or the communication interface;
b) Determining the underbody impact based on the detected first condition data;
c) Determining a degree of severity, comprising a plurality of levels, of the underbody impact based on second condition data characterizing a severity of the underbody impact detected using the second sensor (240, 241) and/or the communication interface; and
d) Determining an output based on the determined degree of severity.

15. An electric vehicle (100) comprising the battery system (200) according to claim 14.
